# EUROPEAN PATENT SPECIFICATION

(11) **EP 3 534 633 B1**
(45) Date of publication and mention of the grant of the patent: **29.11.2023**
(21) Application number: 17863947.2
(22) Date of filing: 26.10.2017
(51) Int. Cl.: H04W 12/041

(54) **COMMUNICATION SYSTEM, BASE STATION AND CONTROL METHOD**
KOMMUNIKATIONSSYSTEM, BASISSTATION UND STEUERUNGSVERFAHREN
SYSTÈME DE COMMUNICATION , STATION DE BASE ET PROCÉDÉ DE COMMANDE

(30) Priority: 26.10.2016 IN 201611036776; 26.04.2017 IN 201711014793
(43) Date of publication of application: 04.09.2019
(73) Proprietor: NEC Corporation, Tokyo 108-8001 (JP)
(72) Inventor: PRASAD Anand Raghawa, Tokyo 108-8001 (JP); ITO Hironori, Tokyo 108-8001 (JP); LAKSHMINARAYANAN Sivakamy, Perungudi Chennai 600096 (IN); ARUMUGAM Sivabalan, Perungudi Chennai 600096 (IN); BASKARAN Sheeba Backia Mary, Perungudi Chennai 600096 (IN); KUNZ Andreas, Heidelberg 69115 (DE)
(74) Representative: MacDougall, Alan John Shaw
(86) International application number: PCT/JP2017/038824
(87) International publication number: WO 2018/079692

(56) References cited:
- WO-A1-2011/055793
- WO-A1-2016/049431
- JP-A- 2009 049 815
- JP-A- 2015 534 354
- US-A1- 2008 311 909
- US-A1- 2014 082 697
- ERICSSON: "UE context handling during inter RAT handover", 3GPP DRAFT; R2-166787 - UE_CONTEXT_HANDLING_AT_IRAT_HANDOVER, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Kaohsiung, Taiwan; 20161010 - 20161014 9 October 2016 (2016-10-09), XP051151245, Retrieved from the Internet: URL:http://www.3gpp.org/ftp/Meetings_3GPP_ SYNC/RAN2/Docs/ [retrieved on 2016-10-09]
- LG Electronics Inc: "Inter-RAT Mobility for Standalone Operation" In: 3GPP Draft; R3-162176 Inter-RAT Mobility for Standalone Operation, XP051151837,
- Nokia: "Additions to Security aspects of dual connectivity" In: "3GPP Draft; S3-161345 Security Aspects of Dual connectivity V1, - 20160920", 20 September 2016 (2016-09-20), XP051170304,
- NEC: "pCR to TR 33.899: Proposal of key issue and solution for option 3", 3GPP DRAFT; DRAFT_S3-162131-V2 WAS S3-161629_PCR TO TR 33 899 PROPOSAL OF KEY ISSUE AND SOLUTION FOR OPTION 3, 3RD GENERATION PARTNERSHIP PROJECT (3GPP), MOBILE COMPETENCE CENTRE ; 650, ROUTE DES LUCI , vol. SA WG3, no. Santa Cruz de Tenerife, Spain; 20161107 - 20161111 18 November 2016 (2016-11-18), XP051187578, Retrieved from the Internet: URL:http://www.3gpp.org/ftp//tsg_sa/WG3_Se curity/TSGS3_85_Santa_Cruz/Docs/ [retrieved on 2016-11-18]
- ERICSSON: "X2AP TP for bearer harmonisation", 3GPP DRAFT; R3-173949, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG3, no. Prague, Czech Republic; 20171009 - 20171013 29 September 2017 (2017-09-29), XP051356446, Retrieved from the Internet: URL:http://www.3gpp.org/ftp/tsg_ran/WG3_Iu /TSGR3_97bis/Docs/ [retrieved on 2017-09-29]

## Description

### Technical Field

The present invention relates to a system comprising an eNB, a gNB and a mobility management entity, MME, to an eNB and to a method performed by an eNB.

### Background Art

LTE (Long Term Evolution), which is defined by 3GPP (3rd Generation Partnership Project) as a wireless communication standard used between a communication terminal and a base station, is in widespread use today. The LTE is a wireless communication standard used to achieve high-speed and high-capacity wireless communications. Further, a packet network called SAE (System Architecture Evolution), EPC (Evolved Packet Core) or the like is defined by 3GPP as a core network to accommodate a wireless network using the LTE.

A communication terminal needs a registration to a core network in order to use communication services using the LTE. As a procedure to register a communication terminal to a core network, an attach procedure is defined by 3GPP. In the attach procedure, an MME (Mobility Management Entity) located in a core network performs authentication or the like of a communication terminal by using identification information of the communication terminal. The MME performs authentication of a communication terminal in collaboration with an HSS (Home Subscriber Server) that manages subscription information or the like. IMEISV (International Mobile Equipment Identity), IMSI (International Mobile Subscriber Identity) or the like is used as identification information of a communication terminal.

Studies have been conducted by 3GPP regarding IoT (Internet of Things) services recently. For IoT services, a large number of terminals that autonomously perform communications without need of user operation (which are referred to hereinafter as IoT terminals) are used. Thus, in order for a service operator to provide IoT services using a large number of IoT terminals, it is desirable to efficiently accommodate a large number of IoT terminals in a mobile network managed by a telecommunications carrier or the like. The mobile network is a network including a wireless network and a core network.

The configuration of a core network to which network slicing is applied is disclosed in Annex B of Non Patent Literature 1. The network slicing is a technique that divides a core network into several slices, each slice supporting each service to be provided, in order to efficiently accommodate a large number of IoT terminals. Further, it is disclosed in Section 5.1 that customization and optimization are required for each sliced network (network slice system).

A system to which network slicing is applied is also called NextGen (Next Generation) System, for example. Further, a wireless network used in the NextGen System may be called NG (Next Generation) RAN (Radio Access Network).

Further, the configuration related to dual connectivity using E-UTRA (Evolved Universal Terrestrial Radio Access) and NR (New Radio) is disclosed in Annex J of Non Patent Literature 1. The NR is a device corresponding to a base station used in next-generation wireless networks of E-UTRA and later standards, for example.

US 2014/082697 A1 discloses methods and apparatuses for offloading traffic from a third generation partnership project (3GPP) access network to a non-3GPP access point (AP). A 3GPP access network entity may receive subscription information associated with a wireless transmit receive unit (WTRU). The 3GPP access network entity may further receive traffic associated with the WTRU. The 3GPP access network entity may further determine whether to offload the traffic to the non-3GPP AP based on the subscription information. The 3GPP access network entity may also forward the traffic to the non-3GPP AP based on its determination.

3GPP Draft No. S3-162131-V2 entitled "pCR to TR 33.899: Proposal of key issue and solution for option 3" discusses one of the deployment scenarios for Next Generation Systems and proposes some changes to security aspects.

### Citation List

### Non Patent Literature

NPL1: 3GPP TR23.799 V1.0.2 (2016-9)
NPL2: 3GPP TR33.899 V0.5.0 (2016-10)

### Technical Problem

When implementing dual connectivity using E-UTRA and NR, it is necessary to achieve a high level of security, just like when using two E-UTRA. However, various functions related to security processing are introduced in NextGen System including NR, which causes a problem that handover using the security procedure currently defined by 3GPP is not readily applicable to the NextGen System. To be specific, it is discussed in Non-Patent Literature 2 to introduce ARPF (Authentication Credential Repository and Processing Function), AUSF (Authentication Server Function), SEAF (Security Anchor Function), SCMF (Security Context Management Function) and the like to NextGen System.

An object of the present disclosure is to provide a communication system, a base station, a control method and a program capable of providing a high level of security when implementing dual connectivity using different communication technologies.

### Summary of Invention

A communication system according to a first aspect of the present invention is a communication system including an eNB, a gNB, and a Mobility Management Entity (MME) wherein: the MME is configured to send, to the eNB, an NR subscription as a part of a Handover Restriction List and a UE NR capability; and the eNB is configured to determine whether to establish Dual Connectivity with the gNB for the terminal by checking whether the terminal has capability for the gNB and is authorized to access the gNB based on the NR subscription and the UE NR capability after the terminal and the eNB establish a Radio Resource Control (RRC) connection.

An eNB according to a second aspect of the present invention is an eNB comprising a processor configured to: receive, from a Mobility Management Entity (MME), an NR subscription as a part of a Handover Restriction List and a UE NR capability; and determine whether to establish Dual Connectivity with the gNB for the terminal by checking whether the terminal has capability for the gNB and is authorized to access the gNB based on the NR subscription and the UE NR capability after the terminal and the eNB establish a Radio Resource Control (RRC) connection.

The invention also provides a method performed by an eNB, as disclosed in claim 3.

### Advantageous Effects of Invention

According to the present invention, it is possible to provide a communication system, a base station, a control method and a program capable of providing a high level of security when implementing dual connectivity using different communication technologies.

### Brief Description of Drawings

Fig. 1 is a configuration diagram of a communication system according to a first embodiment.
Fig. 2 is a configuration diagram of a communication system according to a second embodiment.
Fig. 3 is a configuration diagram of a communication system according to the second embodiment.
Fig. 4 is a view showing security keys applied to user data sent via NR according to the second embodiment.
Fig. 5 is a view showing a security key hierarchy according to the second embodiment.
Fig. 6 is a view illustrating initial attach procedure according to the second embodiment.
Fig. 7 is a view illustrating dual connectivity procedure according to the second embodiment.
Fig. 8 is a view illustrating dual connectivity procedure according to the second embodiment.
Fig. 9 is a view illustrating dual connectivity procedure according to the second embodiment.
Fig. 10 is a view illustrating dual connectivity procedure according to the second embodiment.
Fig. 11 is a view illustrating dual connectivity procedure according to a third embodiment.
Fig. 12 is a view illustrating dual connectivity procedure according to the third embodiment.
Fig. 13 is a view illustrating dual connectivity procedure according to the third embodiment.
Fig. 14 is a view illustrating dual connectivity procedure according to the third embodiment.
Fig. 15 is a view illustrating dual connectivity procedure according to the third embodiment.
Fig. 16 is a view illustrating a format of UE network capability according to a fourth embodiment.
Fig. 17 is a view illustrating an information list stored in MME and HSS according to the fourth embodiment.
Fig. 18 is a view illustrating a format of UE security capability according to the fourth embodiment.
Fig. 19 is a view illustrating a format of an Initial Context setup request message according to the fourth embodiment.
Fig. 20 is a view illustrating Handover Restriction List IE according to the fourth embodiment.
Fig. 21 is a view illustrating dual connectivity procedure according to the fourth embodiment.
Fig. 22 is a view illustrating a method of requesting UE's capability and NR Subscription according to the fourth embodiment.
Fig. 23 is a view illustrating a method of requesting UE's capability and NR Subscription according to the fourth embodiment.
Fig. 24 is a view illustrating derivation of security keys according to the first to third embodiments.
Fig. 25 is a view illustrating derivation of security keys according to the first to third embodiments.

### Description of Embodiments

### First Embodiment

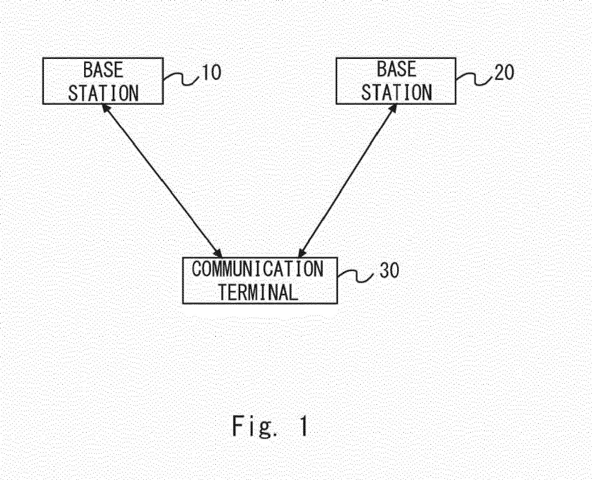

Embodiments of the present invention are described hereinafter with reference to the drawings. A configuration example of a communication system according to a first embodiment is described with reference to Fig. 1. The communication system in Fig. 1 includes a base station 10, a base station 20, and a communication terminal 30.

The base station 10, the base station 20 and the communication terminal 30 may be a computer device that operates when a processor executes a program stored in a memory. The processor may be, for example, a microprocessor, an MPU (Micro Processing Unit) or a CPU (Central Processing Unit). The memory may be a volatile memory, a nonvolatile memory, or a combination of a volatile memory and a nonvolatile memory. The processor executes one or a plurality of programs including a group of instructions for causing a computer to perform algorithms described with reference to the following drawings.

The communication terminal 30 may be a cellular phone terminal, a smart phone terminal, an IoT terminal or the like. The communication terminal 30 may have information related to UE NR capability to access the base station 20. The UE NR capability may include capability related to security.

The base station 10 communicates with the communication terminal 30 by using a first communication technology. The first communication technology may be a wireless communication technology defined by 3GPP, or it may be a wireless communication technology defined by another standardizing body. Alternatively, the first communication technology may be wireless LAN communication. The base station 10 is connected to a core network. The core network may send, to the base station 10, information related to access right to the base station 20 which is granted to the communication terminal 30.

The base station 20 communicates with the communication terminal 30 by using a second communication technology. The second communication technology is a communication technology different from the first communication technology. The second communication technology may be a next-generation communication technology of E-UTRA, LTE (Long Term Evolution) and later standards defined by 3GPP. The base station 20 may be NR (New Radio) of 5G (Generation) (NextGen(Next Generation)). For example, the communication terminal 30 further communicates with the base station 20 while continuing to communicate with the base station 10. A communication technology that allows the communication terminal 30 to communicate with the base station 10 and the base station 20 at substantially the same timing may be called dual connectivity.

The base station 10 receives a first message containing UE (User Equipment) capability sent from the communication terminal 30. For example, the base station 10 determines whether the communication terminal 30 can communicate with the base station 20 by using the UE capability. Specifically, the base station 10 determines whether the communication terminal 30 can perform dual connectivity using the base station 20. The base station 10 receives a second message containing UE capability and sends, to the communication terminal 30, information about security keys to be used for communication between the communication terminal 30 and the base station 20, which is determined based on the UE capability.

The UE capabilities may be, for example, identification information indicating a communication technology supported by the communication terminal 30. The UE capabilities may include identification information indicating at least one communication technology. The UE capabilities may include information about UE capability for the communication terminal 30 to access the base station 20. The UE capability may include capability related to security.

When the base station 10 determines that the communication terminal 30 can communicate with the base station 20, the base station 20 communicates with the communication terminal 30 by using a second security key, which is different from a first security key used by the base station 10 to communicate with the communication terminal 30. The second security key is derived based on the UE capabilities.

The security keys may be, for example, keys to be used for encryption and integrity of data sent between the base station 10 or the base station 20 and the communication terminal 30.

As described above, the communication system in Fig. 1 can determine, based on the UE capabilities, whether the communication terminal 30 can perform dual connectivity using the base station 20 while the base station 10 communicates with the communication terminal 30. Further, the base station 20 can communicate with the communication terminal 30 by using a security key different from a security key used by the base station 10 to communicate with the communication terminal 30. In other words, the communication terminal 30 can perform dual connectivity by using the first security key for communication with the base station 10 and using the second security key for communication with the base station 20. As a result, the communication terminal 30 can perform dual connectivity, retaining a high level of security in communication with each base station.

### Second Embodiment

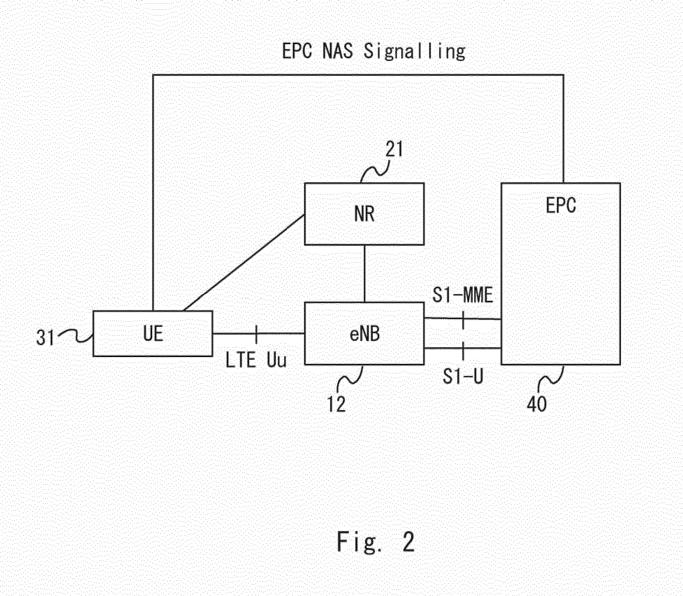

A configuration example of a communication system according to a second embodiment is described with reference to Fig. 2. The communication system in Fig. 2 includes a UE 31, an eNB (Evolved Node B) 12, an NR 21, and an EPC 40. The UE 31 in Fig. 2 corresponds to the communication terminal 30 in Fig. 1. The eNB 12 corresponds to the base station 10 in Fig. 1. The NR 21 corresponds to the base station 20 in Fig. 1. The UE 31 is a general term for communication terminals used in 3GPP. The eNB 12 is a base station that supports LTE as a wireless communication technology. The NR 21 corresponds to a base station that supports a wireless communication technology after LTE. The base station that supports a wireless communication technology after LTE may be a gNB 22, which is NR of 5G, for example.

Fig. 2 shows that the UE 31 performs dual connectivity with the eNB 12 and the NR 21. A reference point between the UE 31 and the eNB 12 is defined as LTE Uu by 3GPP. The reference point may be called an interface.

Further, in Fig. 2, when the UE 31 performs dual connectivity, the eNB 12 determines whether to add the NR 21. In other words, while the eNB 12 communicates with the UE 31, the eNB 12 determines whether to add the NR 21 as the second access point of the UE 31 in order to achieve dual connectivity related to the UE 31.

To determine whether to add the NR 21, the eNB 12 communicates with a node device that constitutes the EPC 40. Specifically, the eNB 12 connects to the EPC 40, which is a core network. The node device that constitutes the EPC 40 may be an MME (Mobility Management Entity) defined by 3GPP, for example. The UE 31 executes NAS (Non Access Stratum) Signalling with the MME that constitutes the EPC 40. The NAS Signalling is a control message sent between the UE 31 and the MME. A reference point used for sending a control message between the eNB 12 and the EPC 40 is defined as S1-MME by 3GPP.

Further, the eNB 12 sends, to the EPC 40, user data (U (User) Plane data) sent from the UE 31 via the LTE Uu reference point, and also sends, to the EPC 40, user data sent from the UE 31 via the NR 21. Further, the eNB 12 sends user data addressed to the UE 31 sent from the EPC 40 to the UE 31 via the LTE Uu reference point and also to the UE 31 via the NR 21. A node device that relays user data in the EPC 40 may be an S-GW (Serving-Gateway), for example. A reference point used for transmitting user data between the eNB 12 and the EPC 40 is defined as S1-U by 3GPP.

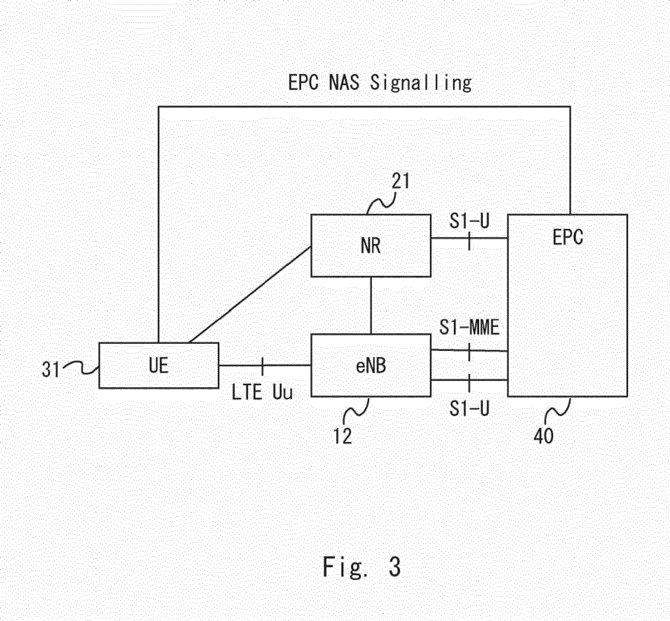

A configuration example of a communication system, which is different from that shown in Fig. 2, is described with reference to Fig. 3. Fig. 3 is different from Fig. 2 in that S1-U is defined as the reference point used for transmitting user data between the NR 21 and the EPC 40. In Fig. 3, the NR 21 transmits user data transmitted from the UE 31 to the EPC 40 via the S1-U reference point defined between the NR 21 and the EPC 40. Further, the EPC 40 sorts and transmits the user data addressed to the UE 31 to the eNB 12 and the NR 21. The NR 21 transmits the user data transmitted from the EPC 40 to the UE 31.

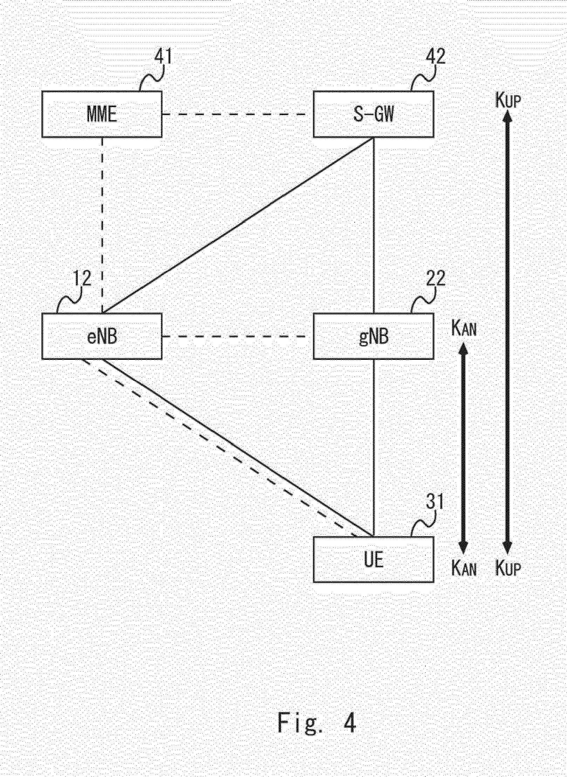

Security keys applied to user data sent via the NR 21 are described hereinafter with reference to Fig. 4. The description of Fig. 4 uses the gNB 22 as the NR 21. The gNB 22 corresponds to a base station used in the NR 21.

In Fig. 4, the dotted lines shown between the UE 31 and the eNB 12, between the eNB 12 and the MME 41, between the MME 41 and the S-GW 42 and between the eNB 12 and the gNB 22 indicate that a control message (C(Control)-Plane data) is transmitted. Further, the solid lines shown between the UE 31 and the eNB 12, between the UE 31 and the gNB 22, between the eNB 12 and the S-GW 42, and between the gNB 22 and the S-GW 42 indicate that user data U-Plane data) is transmitted.

When the gNB 22 is used as a security anchor, a security key K_{AN} is used to protect user data transmitted between the UE 31 and the gNB 22. Further, when the S-GW 42 is used as a security anchor, a security key K_{UP} is used to protect user data transmitted between the UE 31 and the S-GW 42. The security anchor may be a node device that has a security key that is not transmitted in the radio zone and derives security keys used for encryption or integrity of data that is transmitted in the radio zone, for example.

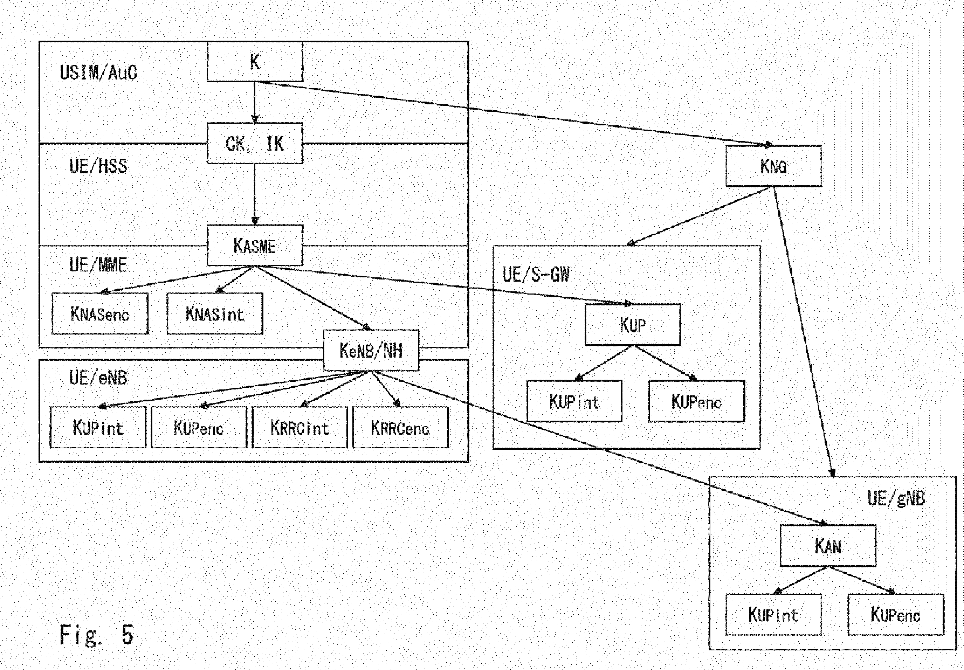

A hierarchy of security keys used in the communication system including the configuration shown in Fig. 2 or 3 is described hereinafter with reference to Fig. 5.

A USIM (Universal Subscriber identification Module) may be a module that stores subscription information related to the UE 31. An AuC (Authentication Center) is a node device that is located in the core network and performs processing related to security. Each of the USIM and the AuC has a security key K.

The USIM and the AuC derive a cipher key CK and an integrity key IK from the security key K. The USIM outputs the cipher key CK and the integrity key IK to the UE 31, and the AuC sends the cipher key CK and the integrity key IK to an HSS (Home Subscriber Server). The HSS is a node device that manages subscription information related to the UE.

The UE 31 and the HSS derive a security key K_{ASME} from the cipher key CK and the integrity key IK. The HSS sends the security key K_{ASME} to the MME 41. The UE 31 and the MME 41 generate, from the security key K_{ASME}, a security key K_{NASenc}, a security key K_{NASint}, a security key K_{eNB}/NH, and a security key K_{UP}.

The security key K_{NASenc} is used for encryption of NAS message sent between the UE 31 and the MME 41. The security key K_{NASint} is used for integrity of NAS message sent between the UE 31 and the MME 41.

The MME 41 sends the security key K_{eNB}/NH to the eNB 12, and sends the security key K_{UP} to the S-GW 42.

The UE 31 and the eNB 12 derive, from the security key K_{eNB}/NH, a security key the K_{UPint}, a security key K_{UPenc}, a security keyK_{RRCint}, and a security keyK_{RRCenc}. The security key K_{UPint} is used for encryption of user data. The security key K_{UPenc} is used for integrity of user data. The security key K_{RRCenc} is used for encryption of RRC (Radio Resource Control) message. The security key K_{RRCint} is used for integrity of RRC message.

When the S-GW 42 is used as a security anchor, the security key K_{UPenc} and the security key K_{UPint} may be derived in the S-GW 42. In other words, when the S-GW 42 is used as a security anchor, the S-GW 42 may derive the security key K_{UPenc} and the security key K_{UPint} from the security key K_{UP}.

When the gNB 22 is used as a security anchor, the security key K_{UPenc} and the security key K_{UPint} may be derived in the gNB 22. In other words, when the gNB 22 is used as a security anchor, the gNB 22 may derive the security key K_{UPenc} and the security key K_{UPint} from the security key K_{AN}. The eNB 12 may derive the security key K_{AN} from the security key K_{eNB}/NH, and sends the security key K_{AN} to the gNB 22.

Alternatively, the security key K_{AN} may be derived from the security key K_{NG}. The security key K_{NG} may be derived from the security key K. Further, the security key K_{NG} may be derived from the cipher key CK and the integrity key IK, or derived from the security key K_{ASME}. The security key K_{NG} is a security key used in the NextGen System.

Further, the security key K_{UP} may be derived from the security keyK_{eNB}/NH. Further, the security key K_{AN} may be derived from the security key K_{ASME}.

The security key K_{UPenc} and the security key K_{UPint} used in the eNB 12 are different from the security key K_{UPenc} and the security key K_{UPint} used in the gNB 22. Further, the security key K_{UPenc} and the security key K_{UPint} used in the eNB 12 are different from the security key K_{UPenc} and the security key K_{UPint} used in the S-GW 42. For example, the security key K_{UPenc} and the security key K_{UPint} used in the eNB 12 may be derived using different parameters from parameters used when deriving the security key K_{UPenc} and the security key K_{UPint} used in the gNB 22 or the S-GW 42. The parameters may be an NS (Network Slice) ID for identifying the network slice or the like, for example.

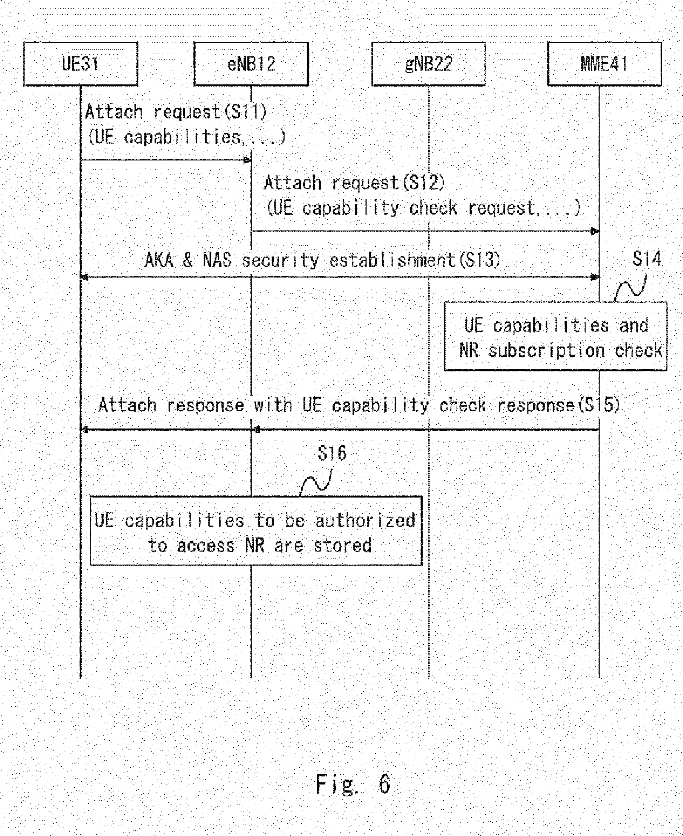

The initial attach procedure according to the second embodiment is described hereinafter with reference to Fig. 6. First, the UE 31 sends an Attach request message containing UE capabilities to the eNB 12 (S11). The Attach request message may contain the capability and security algorithms related to the NR to be used in the gNB 22. Next, the eNB 12 sends the Attach request message containing UE capability check request to the MME 41 (S12). The Attach request message sent from the eNB 12 to the MME 41 may contain the capability and security algorithms related to the NR to be used in the gNB 22.

Then, AKA (Authentication and Key Agreement) & NAS security establishment is performed between the UE 31 and the MME 41 (S13). By performing AKA & NAS security establishment, security keys are shared between the UE 31 and the MME 41. Further, AKA & NAS security establishment may be omitted if already performed.

The MME 41 then performs UE capabilities and NR subscription check (S14). For example, the MME 41 may acquire and hold subscription information related to the UE from the HSS or another network node, and perform UE capabilities and NR subscription check by using the acquired subscription information.

The UE capabilities check and NR subscription check may be determining whether the UE 31 is authorized to use a communication technology supported by the UE 31. For example, the MME 41 may determine that some of a plurality of communication technologies supported by the UE 31 are authorized to use. To be specific, the MME 41 may determine whether the UE 31 has the access right to the NR and whether the user of the UE 31 subscribes the service provided by the NR.

Then, the MME 41 sends Attach response with UE capability check response to the eNB 12, and the eNB 12 sends the Attach response with UE capability check response to the UE 31 (S15). The Attach response with UE capability check response may contain information indicating a communication technology which the UE 31 is authorized to use. The MME 41 may send an Initial Context setup request message containing the Attach response with UE capability check response to the eNB 12. Further, the eNB 12 may send an RRC connection reconfiguration message containing the Attach response with UE capability check response to the UE 31.

The eNB 12 stores, into a memory or the like, information about the UE capabilities of the UE 31 to access the NR and the access right to the NR granted to the UE 31 (S16). The UE capabilities stored into the memory by the eNB 12 may be information containing a certain communication technology authorized to use among one or more communication technologies sent from the UE 31 in Step S11, for example. As described above, in the initial attach phase, a node (e.g., eNB 12) located close to the UE 31 stores information about the UE capabilities to access the NR and the access right to the NR, which enables security processing to be performed easily and more quickly.

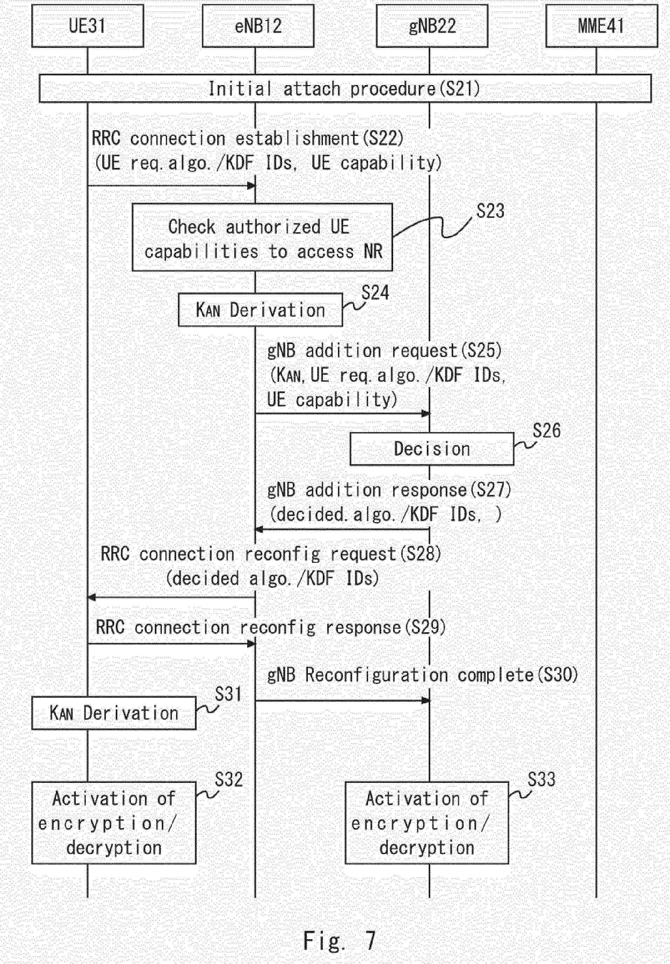

The dual connectivity procedure is described hereinafter with reference to Fig. 7. First, it is assumed that the initial attach procedure described in Fig. 6 is performed in the UE 31, the eNB 12 and the MME 41 (S21). Next, the UE 31 sends an RRC connection establishment message to the eNB 12 (S22). The RRC connection establishment message contains UE req.algo./KDF IDs and UE capability. The UE req.algo./KDF IDs are identification information of algorithms used for encryption and integrity and KDF (Key Derivation Function) to be used, which are requested by the UE 31. The identification information of algorithms used for encryption and integrity or the like requested by the UE 31 may be, in other words, identification information of algorithms used for encryption and integrity or the like designated by the UE 31. The UE req.algo./KDF IDs may contain identification information of a plurality of algorithms and KDFs. The UE capability may be information indicating a communication technology that is used by the UE 31 for communication with the gNB 22.

Then, in order to determine the use of dual connectivity using the gNB 22, the eNB 12 checks whether the UE 31 has the UE capability to access the NR and has the access right to the NR. The eNB 12 determines whether the UE capability sent from the UE 31 is contained in the UE capabilities stored in Step S16 of Fig. 6 (S23). Specifically, the eNB 12 determines whether the UE 31 has the UE capability to access the NR before initiating the security processing for selecting a security algorithm suitable for the gNB 22. Further, by checking whether the UE 31 has the access right to the NR, it is possible to avoid access to the NR by the UE with no right to access.

When the eNB 12 determines that the UE capability sent from the UE 31 is contained in the UE capabilities stored in Step S16 of Fig. 6, the eNB 12 derives the security key K_{AN} (S24).

After that, the eNB 12 sends a gNB addition request message to the gNB 22 (S25). The gNB addition request message contains the security key K_{AN}, the UE req.algo./KDF IDs, and the UE capability. The eNB 12 may select the gNB 22 capable of performing dual connectivity based on the UE capability, and send a gNB addition request message to the selected gNB 22.

Then, the gNB 22 decides an algorithm and KDF to be used for communication with the UE 31 from a plurality of algorithms and KDFs based on the UE capability (S26). When the algorithm and KDF decided by the gNB 22 are different from the algorithm and KDF requested by the UE 31, the eNB 12 derives K_{AN} by using the algorithm and KDF decided by the gNB 22. Further, the gNB 22 sends the derived K_{AN} to the gNB 22. The gNB 22 then send a gNB addition response message to the eNB 12 (S27). The gNB addition response message contains identification information of the decided algorithm and KDF (decided.algo./KDF IDs).

The eNB 12 then sends an RRC connection reconfig request message to the UE 31 (S28). The RRC connection reconfig request message contains the algorithm and KDF identification information contained in the gNB addition response message. As a result that the KDF identification information (KDF ID) is sent to the UE 31, security keys can be derived in the UE 31 and the eNB 12, in the UE 31 and the MME 41 or the like without directly sending security keys between the UE 31 and the eNB 12.

After that, the UE 31 sends an RRC connection reconfig response message to the eNB 12 (S29). The eNB 12 then sends a gNB Reconfiguration complete message to the gNB 22 (S30).

Further, after sending the RRC connection reconfig response message in Step S29, the UE 31 derives the security key K_{AN} (S31). Further, the UE 31 and the gNB 22 derive the K_{UPint} and K_{UPenc} from the security key K_{AN}. After that, the UE 31 and the gNB 22 activate encryption and decryption (S32, S33).

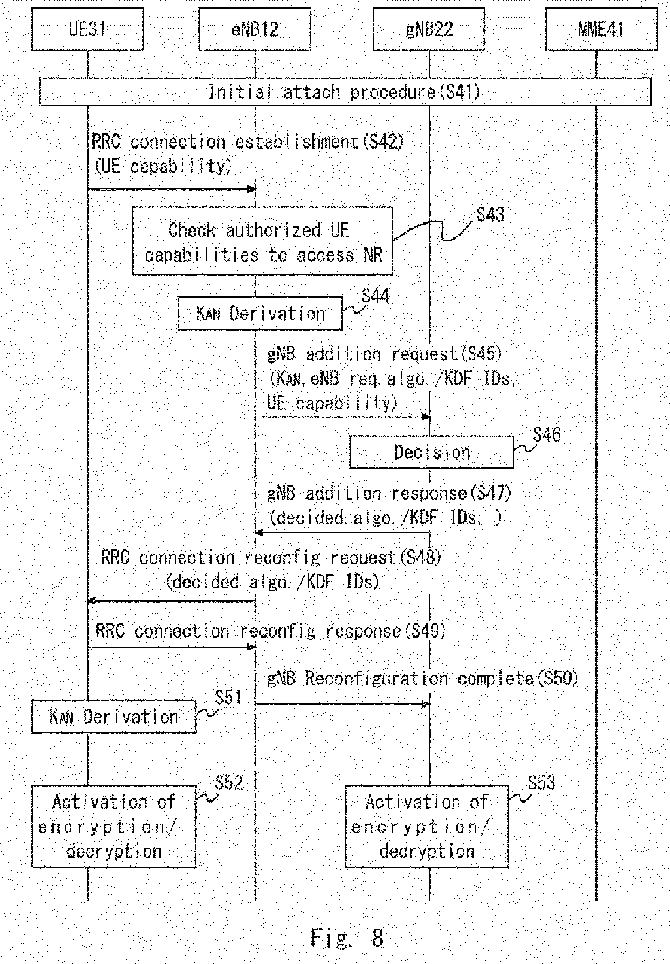

A dual connectivity procedure, which is different from that in Fig. 7, is described hereinafter with reference to Fig. 8. Differences of Fig. 8 from Fig. 7 are mainly described below.

In Step S42 in Fig. 8, the UE 31 sends, to the eNB 12, an RRC connection establishment message that contains UE capability without containing UE req.algo./KDF IDs. In Step S45, the eNB 12 sends, to the gNB 22, a gNB addition request message that contains eNB req.algo./KDF IDs, not UE req.algo./KDF IDs. Thus, in Fig. 8, identification information of algorithms used for encryption and integrity and KDF (Key Derivation Function) to be used, which are requested or designated by the eNB 12, are contained in the gNB addition request message.

The other processing is the same as the processing in Fig. 7, and therefore detailed description thereof is omitted.

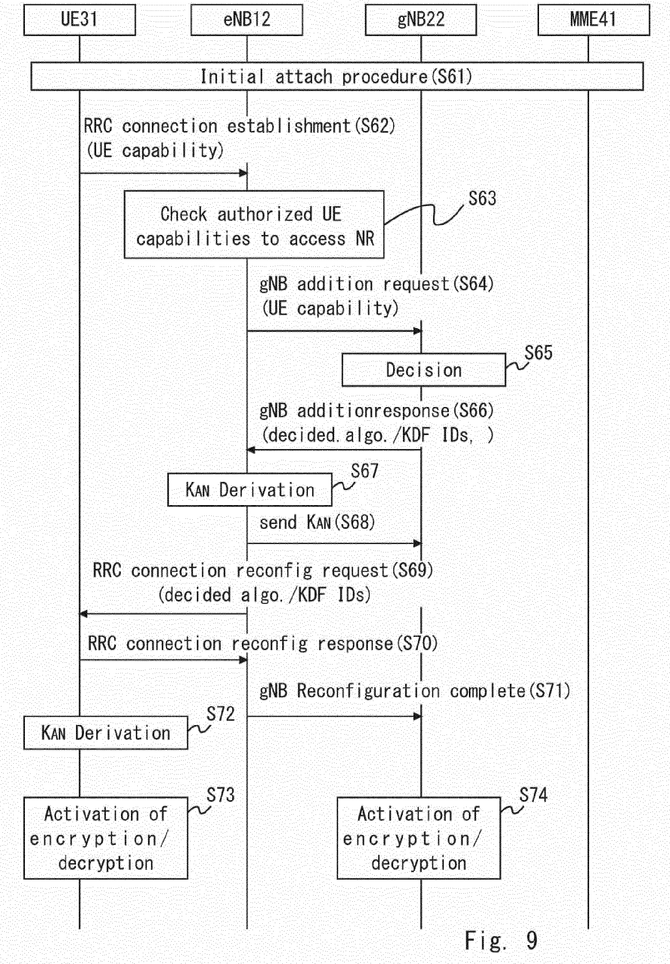

A dual connectivity procedure, which is different from those in Figs. 7 and 8, is described hereinafter with reference to Fig. 9. Differences of Fig. 9 from Figs. 7 and 8 are mainly described below.

Steps S61 to S63 are substantially the same as Steps S41 to S43 in Fig. 8, and therefore detailed description thereof is omitted.

Then, the eNB 12 sends, to the gNB 22, a gNB addition request message that contains UE capability without containing UE req.algo./KDF IDs and eNB req.algo./KDF IDs (S64).

Then, the gNB 22 decides an algorithm and KDF to be used for communication with the UE 31 from a plurality of algorithms and KDFs based on the UE capability (S65). The gNB 22 then sends a gNB addition response message to the eNB 12 (S27). The gNB addition response message contains identification information of the decided algorithm and KDF.

The eNB 12 then derives the security key K_{AN} (S67). The eNB 12 sends the derived security key K_{AN} to the gNB 22 (S68). Steps S69 to S74 are substantially the same as Steps S28 to S33 in Fig. 7, and therefore detailed description thereof is omitted.

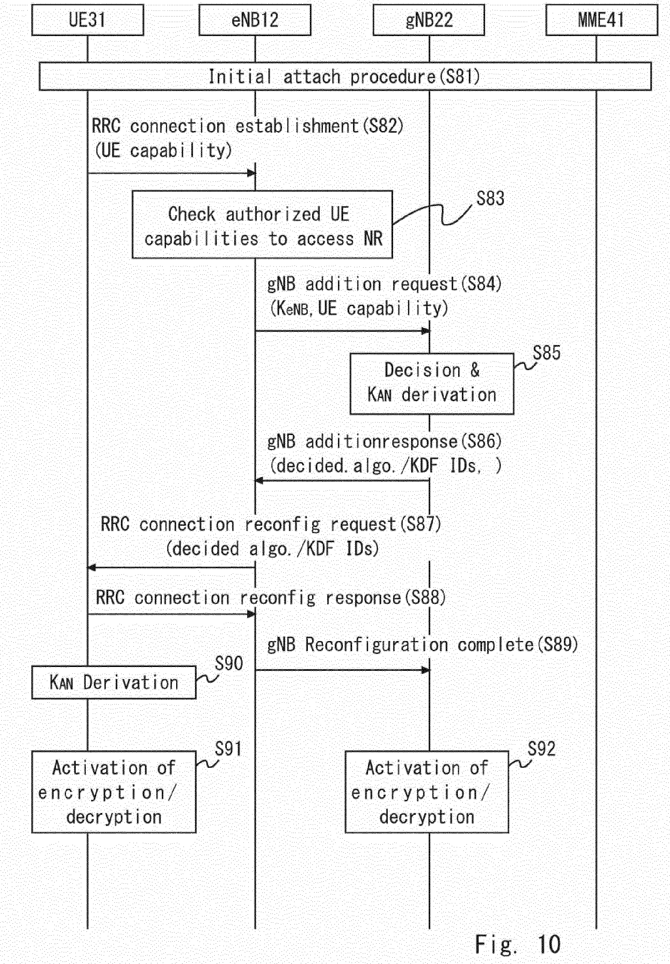

A dual connectivity procedure, which is different from those in Figs. 7 to 9, is described hereinafter with reference to Fig. 10. Differences of Fig. 10 from Figs. 7 to 9 are mainly described below.

Steps S81 to S83 are substantially the same as Steps S41 to S43 in Fig. 8, and therefore detailed description thereof is omitted.

Then, the eNB 12 sends a gNB addition request message to the gNB 22 (S84). The gNB addition request message contains UE capability and a security key K_{eNB}. The security key K_{eNB} may be the security key K_{eNB} derived in the MME 41, for example, and sent from the MME 41 to the eNB 12 at arbitrary timing before Step S84.

The gNB 22 then decides an algorithm and KDF to be used for communication with the UE 31 from a plurality of algorithms and KDFs based on the UE capability, and further derives the security key K_{AN} from the security key K_{eNB} (S85).

Steps S86 to S92 are substantially the same as Steps S27 to S33 in Fig. 7, and therefore detailed description thereof is omitted.

As described above, by performing the dual connectivity procedure according to the second embodiment, the gNB 22 that is added to perform dual connectivity can share the security key K_{AN} with the UE 31. Thus, when the UE 31 performs dual connectivity, the UE 31 can establish security and communicate with each of the eNB 12 and the gNB 22.

### Third Embodiment

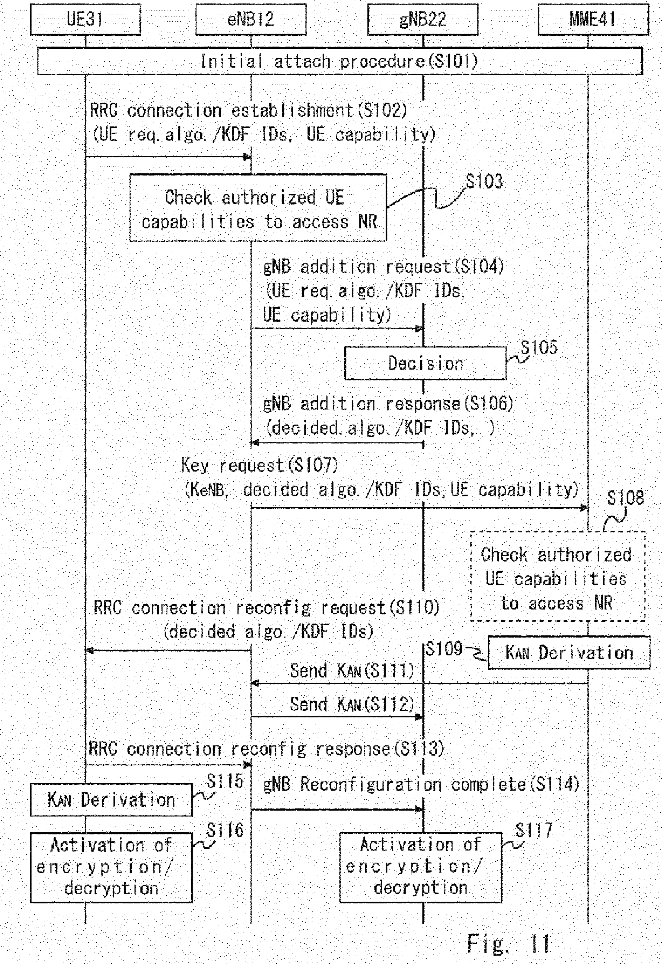

A dual connectivity procedure according to a third embodiment is described with reference to Fig. 11. A process where the MME 41 located in the core network derives the security key K_{AN} is described in the third embodiment.

First, it is assumed that the initial attach procedure described in Fig. 6 is performed in the UE 31, the eNB 12 and the MME 41 (S101). Next, the UE 31 sends an RRC connection establishment message to the eNB 12 (S102). The RRC connection establishment message contains UE req.algo./KDF IDs and UE capability.

Next, the eNB 12 determines whether the UE capability sent from the UE 31 is contained in the UE capabilities stored in Step S16 of Fig. 6 (S103).

Then, the eNB 12 sends a gNB addition request message to the gNB 22 (S104). The gNB addition request message contains the UE req.algo./KDF IDs and the UE capability.

Then, the gNB 22 decides an algorithm and KDF to be used for communication with the UE 31 from a plurality of algorithms and KDFs based on the UE capability (S105). The gNB 22 then sends a gNB addition response message to the eNB 12 (S106). The gNB addition response message contains identification information of the decided algorithm and KDF (decided.algo./KDF IDs).

After that, the eNB 12 sends a Key request message to the MME 41 in order to request derivation of the security key K_{AN} (S107). The Key request message contains the security key K_{eNB}, the decided algorithm and KDF identification information (decided.algo./KDF IDs), and the UE capability. The MME 41 then determines whether the UE capability contained in the Key request message is contained in the UE capabilities, just like the eNB 12 did in Step S103 (S108). Note that the processing of Step S108 may be omitted. The MME 41 may acquire the UE capabilities from the HSS, for example. Further, the MME 41 may proceed to the next step S109 without carrying out Step S108.

Then, the MME 41 derives the security key K_{AN} from the security key K_{eNB} contained in the Key request message (S109). When the security key K_{AN} is derived from the security key K_{ASME}, the eNB 12 does not necessarily add the security key K_{eNB} in the Key request message in Step S107.

After sending the Key request message to the UE 31 in Step S107, the eNB 12 sends an RRC connection reconfig request message to the UE 31 (S1 10). The RRC connection reconfig request message contains the algorithm and KDF identification information contained in the gNB addition response message.

After deriving the security key K_{AN}, the MME 41 sends the security key K_{AN} to the eNB 12 (S111). Then, the eNB 12 sends the received security key K_{AN} to the gNB 22 (S112). If direct communication is possible between the MME 41 and the gNB 22, the MME 41 may directly send the security key K_{AN} to the gNB 22.

Steps S113 to S117 are substantially the same as Steps S29 to S33 in Fig. 7, and therefore detailed description thereof is omitted.

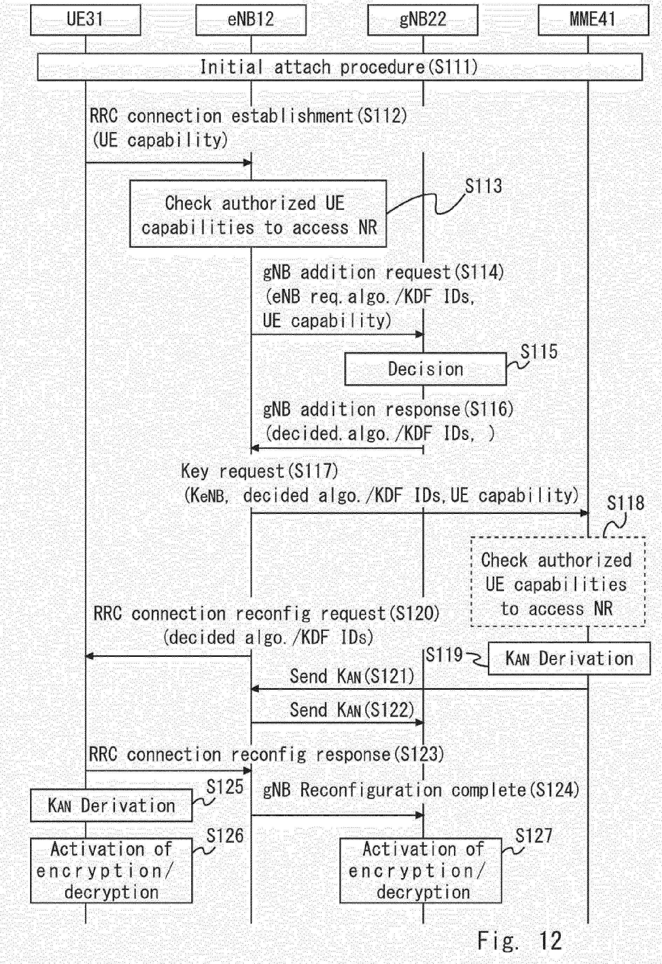

A dual connectivity procedure, which is different from that in Fig. 11, is described hereinafter with reference to Fig. 12. Differences of Fig. 12 from Fig. 11 are mainly described below.

In Step S112 of Fig. 12, the UE 31 sends, to the eNB 12, an RRC connection establishment message that contains UE capability without containing UE req.algo./KDF IDs. In Step S114, the eNB 12 sends, to the gNB 22, a gNB addition request message that contains eNB req.algo./KDF IDs, not UE req.algo./KDF IDs. Thus, in Fig. 12, identification information of algorithms used for encryption and integrity and KDF (Key Derivation Function) to be used, which are requested or designated by the eNB 12, are contained in the gNB addition request message.

The other processing is the same as the processing in Fig. 11, and therefore detailed description thereof is omitted.

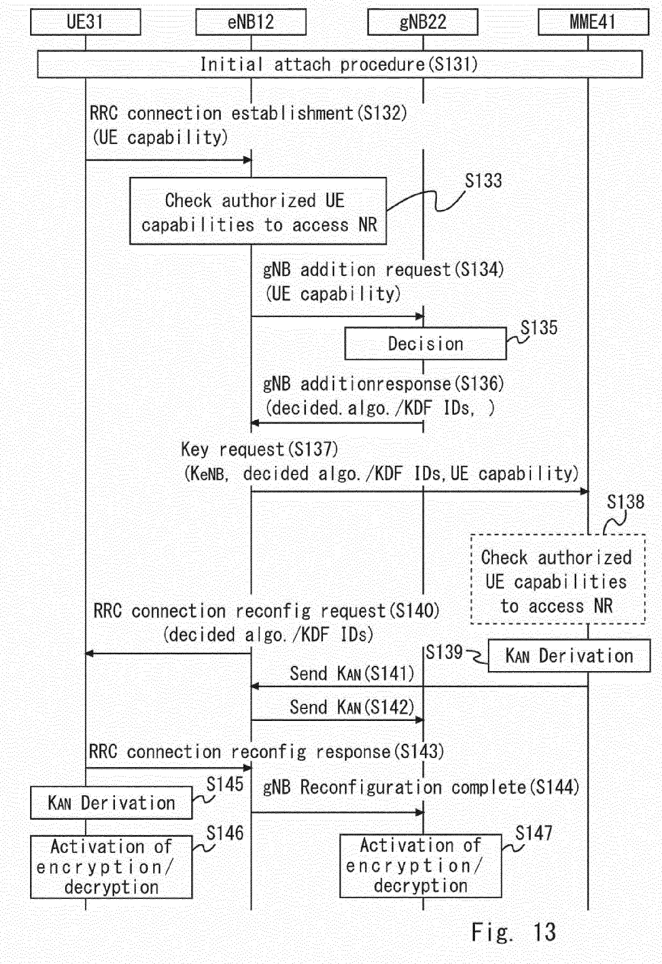

A dual connectivity procedure, which is different from those in Figs. 11 and 12, is described hereinafter with reference to Fig. 13. Differences of Fig. 13 from Figs. 11 and 12 are mainly described below.

Steps S131 to S133 are substantially the same as Steps S111 to S113 in Fig. 12, and therefore detailed description thereof is omitted.

Then, the eNB 12 sends, to the gNB 22, a gNB addition request message that contains UE capability without containing UE req.algo./KDF IDs and eNB req.algo./KDF IDs (S134).

Then, the gNB 22 decides an algorithm and KDF to be used for communication with the UE 31 from a plurality of algorithms and KDFs based on the UE capability (S135). The gNB 22 then sends a gNB addition response message to the eNB 12 (S136). The gNB addition response message contains identification information of the decided algorithm and KDF. Steps S137 to S147 are substantially the same as Steps S117 to S127 in Fig. 12, and therefore detailed description thereof is omitted.

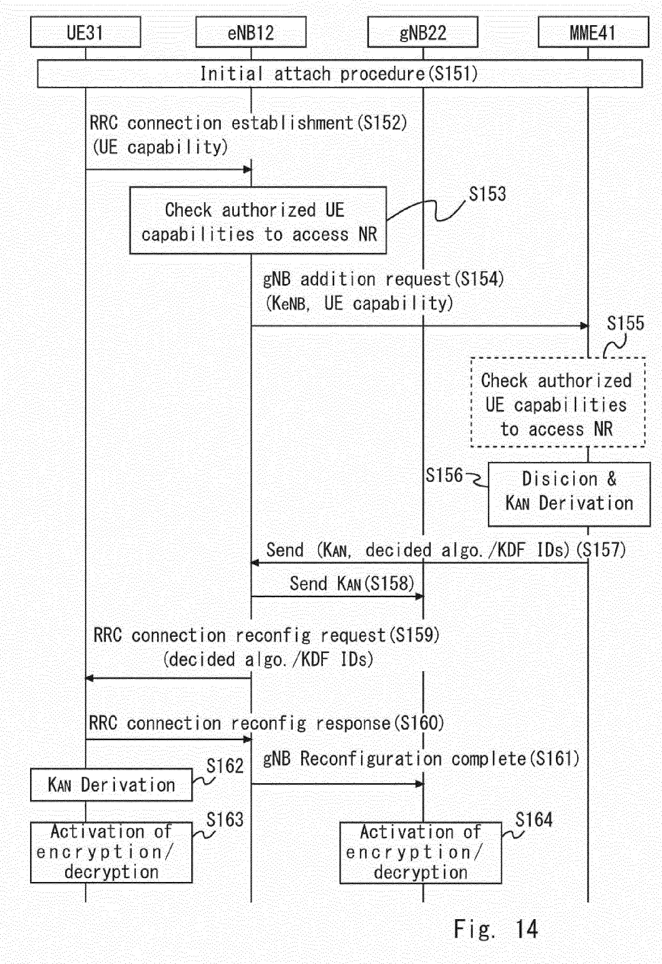

A dual connectivity procedure, which is different from those in Figs. 11 to 13, is described hereinafter with reference to Fig. 14. Differences of Fig. 14 from Figs. 11 to 13 are mainly described below.

Steps S151 to S153 are substantially the same as Steps S111 to S113 in Fig. 12, and therefore detailed description thereof is omitted.

Then, the eNB 12 sends a gNB addition request message to the MME 41 (S154). The gNB addition request message contains the security key K_{eNB} and the UE capability.

Step S155 is substantially the same as Step S108 in Fig. 11, and therefore detailed description thereof is omitted. Then, the MME 41 decides an algorithm and KDF to be used for communication with the UE 31 from a plurality of algorithms and KDFs based on the UE capability. Further, the MME 41 derives the security key K_{AN} from the security key K_{eNB} contained in the Key request message (S156). When the security key K_{AN} is derived from the security key K_{ASME}, the eNB 12 does not necessarily add the security key K_{eNB} in the Key request message in Step S154.

Then, the MME 41 sends the security key K_{AN} and identification information of the decided algorithm and KDF (decided.algo./KDF IDs) to the eNB 12 (S157). The eNB 12 then sends the security key K_{AN} to the gNB 22 (S158).

The eNB 12 sends an RRC connection reconfig request message to the UE 31. The RRC connection reconfig request message contains the decided algorithm and KDF identification information (decided.algo./KDF IDs). Steps S160 to S164 are substantially the same as Steps S113 to S117 in Fig. 1, and therefore detailed description thereof is omitted.

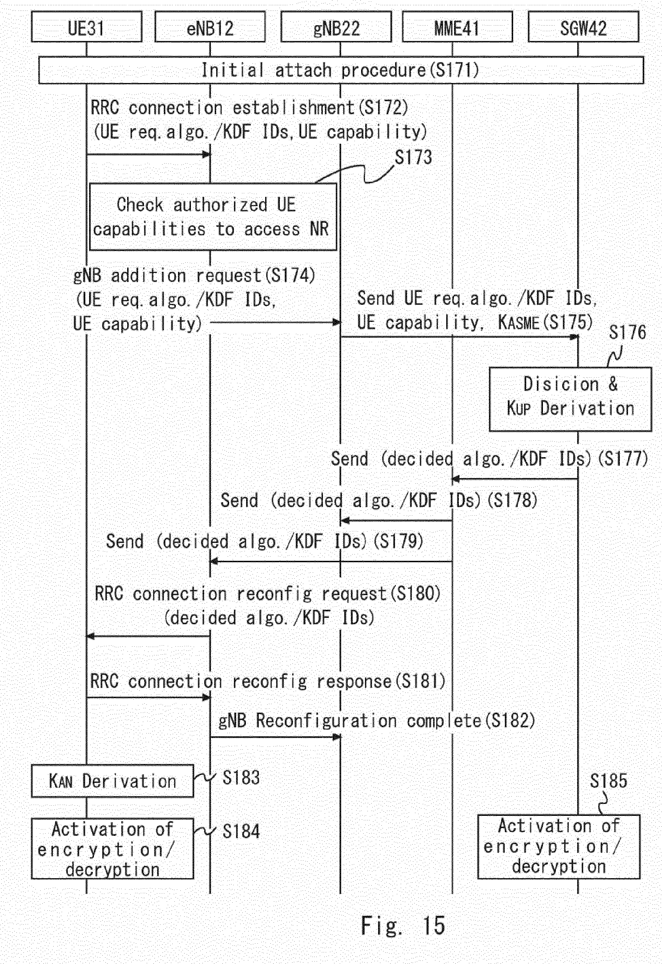

A dual connectivity procedure in the case where the S-GW 42 is used as a security anchor is described hereinafter with reference to Fig. 15. In Fig. 15, a process where the S-GW 42 located in the core network derives a security key K_{UP} is described.

Steps S171 to S174 are substantially the same as Steps S101 to S104 in Fig. 11, and therefore detailed description thereof is omitted.

Then, the gNB 22 sends, to the S-GW 42, the identification information of UE req.algo./KDF IDs and the UE capability received from the eNB 12 and K_{ASME} (S175). K_{ASME} may be sent from the MME 41 to the S-GW 42.

Then, the S-GW 42 decides an algorithm and KDF to be used for communication with the UE 31 from a plurality of algorithms based on the UE capability (S176). Further, in Step S176, the S-GW 42 derives the security key K_{UP} from the security key K_{ASME}.

Then, the S-GW 42 sends identification information of the decided algorithm and KDF (decided.algo./KDF IDs) to the MME 41 (S177). Further, the MME 41 sends the identification information of the decided algorithm and KDF to the gNB 22 and the eNB 12 (S178, S179).

Steps S180 to S185 are substantially the same as Step S110 and Steps S113 to S117 in Fig. 11, and therefore detailed description thereof is omitted. Note that, while the gNB 22 activates encryption and integrity in Step S117 of Fig. 11, the S-GW 42 activates encryption and integrity in Step S185 of Fig. 15 (S32, S33).

As described above, by performing the dual connectivity procedure according to the third embodiment, the gNB 22 that is added to perform dual connectivity can acquire the security key K_{AN} generated in the MME 41. The gNB 22 can thereby share the security key K_{AN} with the UE 31. As a result, when the UE 31 performs dual connectivity, the UE 31 can establish security and communicate with each of the eNB 12 and the gNB 22.

### Fourth Embodiment

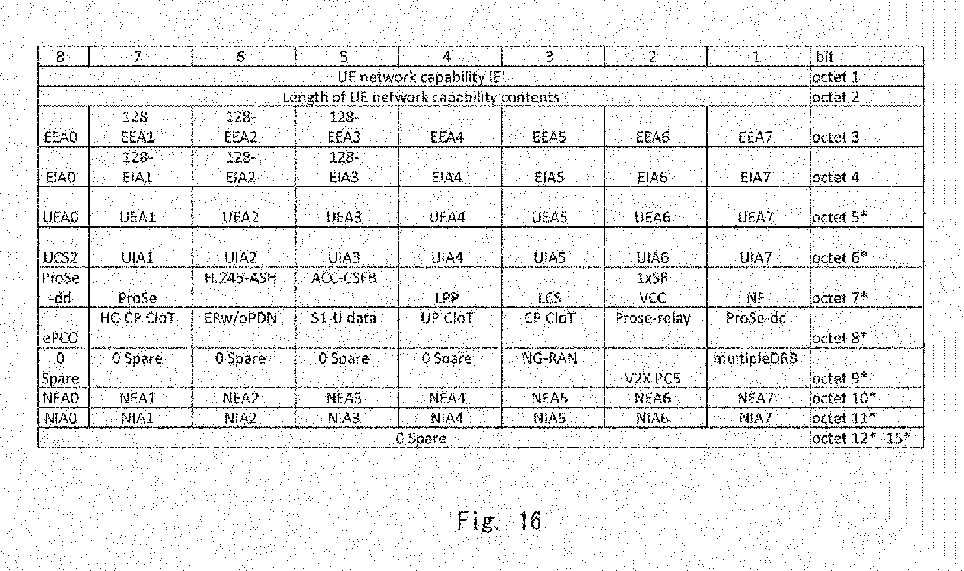

A format of UE network capability according to the fourth embodiment is described hereinafter with reference to Fig. 16. The UE network capability is contained in an Attach request message sent from the UE 31 in the initial attach procedure. The UE network capability contains an algorithm for encryption and an algorithm for integrity used in the NR, for example. In other words, new algorithms for the NR are added to the UE network capability IE in order to send the algorithms in the Attach request. For example, the algorithm for encryption and the algorithm for integrity are identified by 4-digit binary numbers and algorithm names. To be specific, the algorithm for encryption may be represented as: "0000₂":NEA0, "0001₂":NEA1, "0010₂":NEA2, "0011₂":NEA3 and the like. Further, the algorithm for integrity may be represented as: "0000₂":NIA0, "0001₂":NIA1, "0010₂":NIA2, "0011₂":NIA3 and the like.

In the format shown in Fig. 16, information indicating whether the UE 31 has NR capability to access NR (or NG-RAN) is set to ocetet 9 and bit 3, for example. Further, the algorithm (NEA0-NEA7) for encryption supported by the UE 31 is shown in octet 10 and bit 1-8. Furthermore, the algorithm (NIA0-NIA7) for integrity supported by the UE 31 is shown in octet 11 and bit 1-8. The algorithm for encryption shown in octet 10 and the algorithm for integrity shown in octet 11 are algorithms used in the NR or 5GS (5G System). For example, when 1 is set to each bit, it means that the UE 31 supports the algorithm associated with this bit, and when 0 is set, it means that the UE 31 does not support the algorithm associated with this bit.

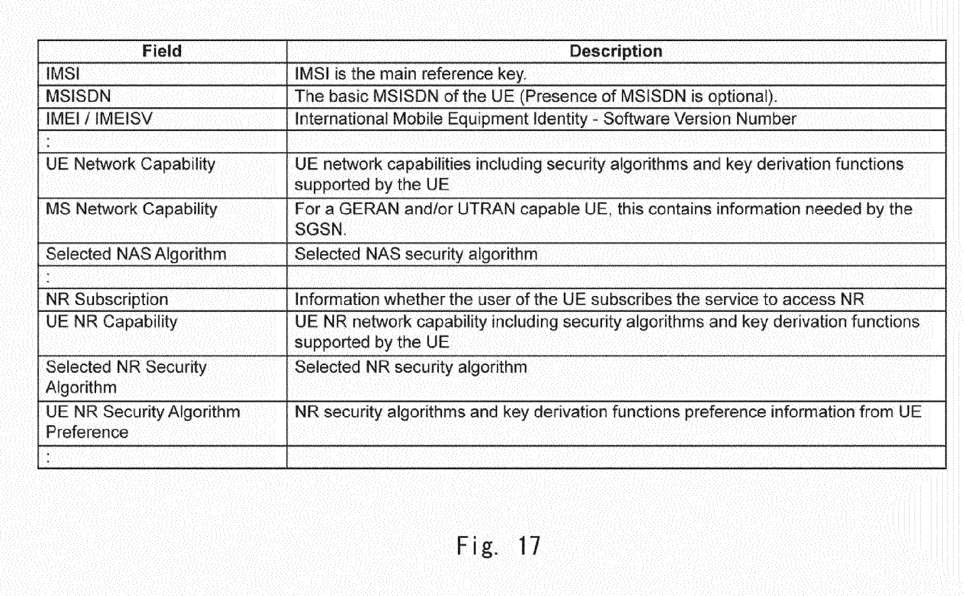

An information list stored in the MME 41 and the HSS is described hereinafter with reference to Fig. 17. NR capability and Subscription information related to NR stored in the MME 41 and the HSS are mainly described below.

Fig. 17 shows that the MME 41 and the HSS have NR Subscription, UE NR Capability, Selected NR Security Algorithm, and UE NR Security Algorithm Preference as the NR capability and the Subscription information related to NR. In other words, the NR subscription IE is added for the MME 41 and the HSS to store this NR subscription IE.

The NR Subscription indicates information as to whether the user of the UE 31 subscribes the service involving access to NR. The UE NR Capability contains security algorithms and key derivation functions supported by the UE 31. The Selected NR Security Algorithm indicates the selected NR Security Algorithm. The UE NR Security Algorithm Preference indicates Preference information related to NR security algorithm and key derivation functions.

The UE NR Capability may be included in another Field stored in the MME 41 and the HSS, and it may be included in UE Radio Access Capability, UE Network Capability, or MS Network Capability, for example.

Further, the NR Subscription may be also included in another Field stored in the MME 41 and the HSS, and it may be included in Access Restriction or EPS Subscribed Charging Characteristics, for example. When the NR Subscription is included in Access Restriction, information indicating RATs (Radio Access Technologies) such as NR or NG-RAN is added to the Access Restriction in order to indicate whether or not the UE 31 is authorized to use the NR.

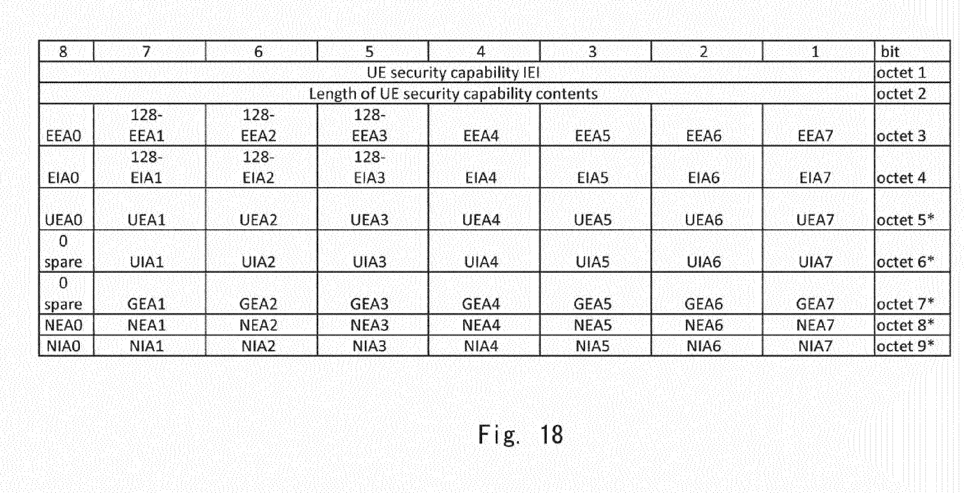

A format of UE security capability according to the fourth embodiment is described hereinafter with reference to Fig. 18. The UE security capability is contained in an Initial Context setup request message sent from the MME 41 in the initial attach procedure. In Fig. 18, the algorithm (NEA0-NEA7) for encryption supported by the UE 31 is shown in octet 8 and bit 1-8. Further, the algorithm (NIA0-NIA7) for integrity supported by the UE 31 is shown in octet 9 and bit 1-8. The algorithm for encryption shown in octet 8 and the algorithm for integrity shown in octet 9 are algorithms used in NR or 5GS (5G System). In other words, new algorithms for the NR are added to the UE security capability IE in order to send the new algorithms for the NR in the Initial context setup request.

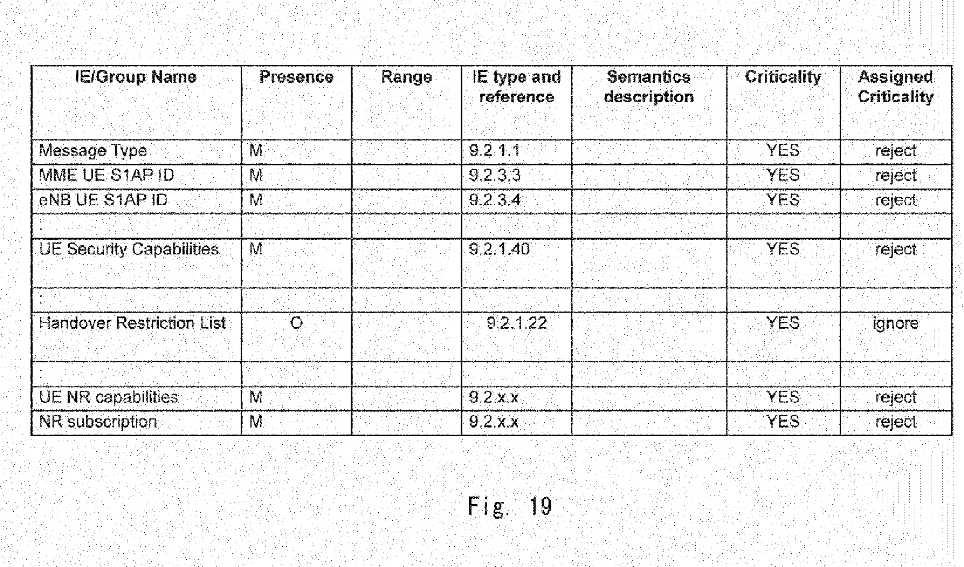

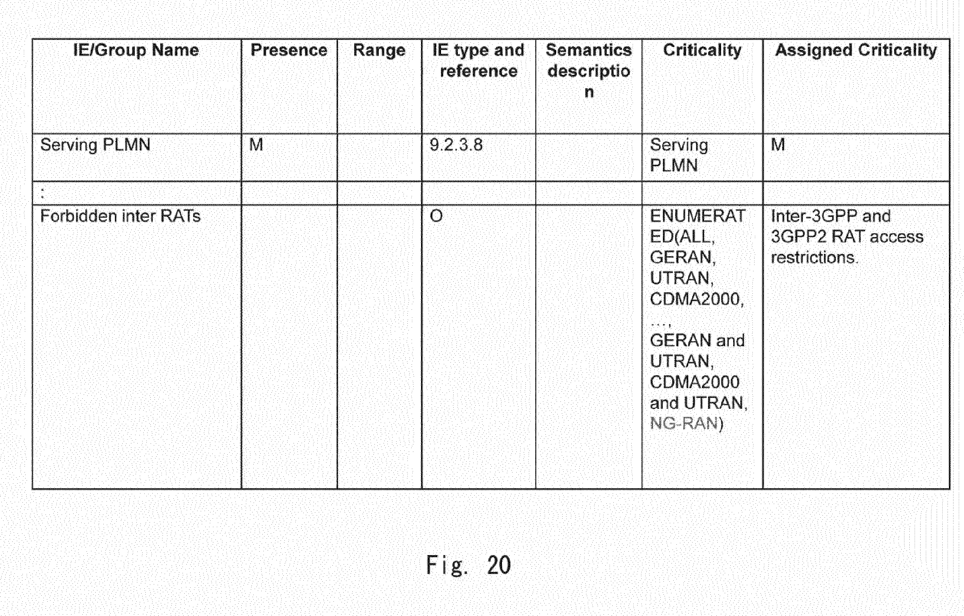

A format of Initial Context setup request message according to the fourth embodiment is described hereinafter with reference to Fig. 19. As shown in Fig. 19, the Initial Context setup request message contains UE NR capabilities and NR subscription. The NR Subscription may be contained in the Handover Restriction List IE shown in Fig. 20. When the NR Subscription is contained in the Handover Restriction List IE, information indicating RATs (Radio Access Technologies) such as NR or NG-RAN is added to the Handover Restriction List IE in order to indicate whether or not the UE 31 is authorized to use the NR.

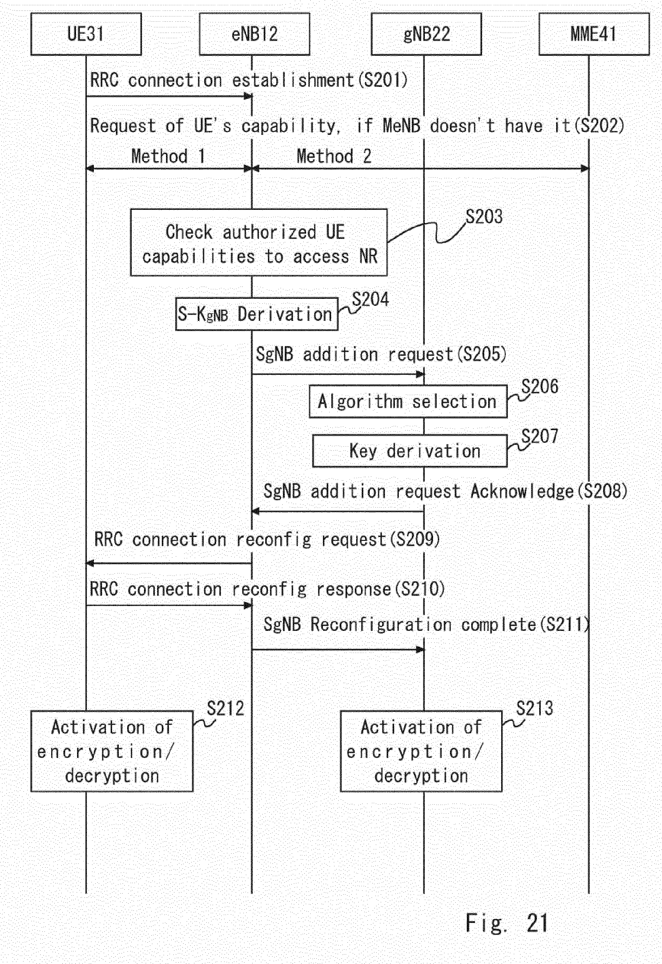

The dual connectivity procedure according to the fourth embodiment is described hereinafter with reference to Fig. 21. In the following description, the eNB 12 operates as Master eNB, and the gNB 22 operates as Secondary gNB. First, the UE 31 establishes RRC connection with the eNB 12 (S201).

When the eNB 12 does not have UE's capability and NR Subscription, the eNB 12 requests UE's capability and NR Subscription (S202). Step S202 carries out one of Method 1 where the eNB 12 requests the UE 31 to provide UE's capability and NR Subscription and Method 2 where the eNB 12 requests the MME 41 to provide UE's capability and NR Subscription. Method 1 and Method 2 are described in detail later. The UE's capability may be UE NR Capability, for example.

Next, the eNB 12 checks the UE's capability and the NR Subscription (S203). When the eNB 12 determines that the UE 31 has the capability to access the NR and further has the access right to the NR, it proceeds to the next Step. Otherwise, if another eNB, not the gNB 22, is available, the eNB 12 carries out processing to perform dual connectivity with this eNB. A process in the case where the eNB 12 determines that the UE 31 has the capability to access the NR and also has the access right to the NR is described hereinbelow.

Then, the eNB 12 derives the security key S-K_{gNB} from the security key K_{eNB} (S204). The security key S-K_{gNB} is used for integrity and confidentiality protection in the gNB 22. The security key S-K_{gNB} corresponds to the security key K_{AN} in Fig. 5, for example. Then, the eNB 12 sends an SgNB addition request message to the gNB 22 (S205). The SgNB addition request message contains the security key S-K_{gNB} and the UE NR Capability containing security algorithms.

Then, the gNB 22 decides security algorithms to be used for integrity and confidentiality protection based on the UE NR Capability (S206). Then, the eNB 12 derives security keys to be used for integrity and confidentiality protection from the security key S-K_{gNB}. The security keys derived by the eNB 12 include a key for integrity and confidentiality protection related to SRB (Signalling Radio Bearer) (e.g., K_{RRCint} and K_{RRCenc}) and a key for integrity and confidentiality protection related to DRB (Data Radio Bearer) (e.g., K_{UPint} and K_{UPenc}), for example.

The gNB 22 then sends an SgNB addition request Acknowledge message to the eNB 12 (S208). The SgNB addition request Acknowledge message contains the security algorithms decided in the gNB 22.

Then, the eNB 12 sends an RRC connection reconfig request message to the UE 31 (S209). The RRC connection reconfig request message contains the security algorithms decided in the gNB 22. The UE 31 then sends an RRC connection reconfig response message to the eNB 12 (S210). The eNB 12 then sends an SgNB Reconfiguration complete message to the gNB 22 (S211). After that, the UE 31 and the gNB 22 activate encryption and decryption (S212, S213).

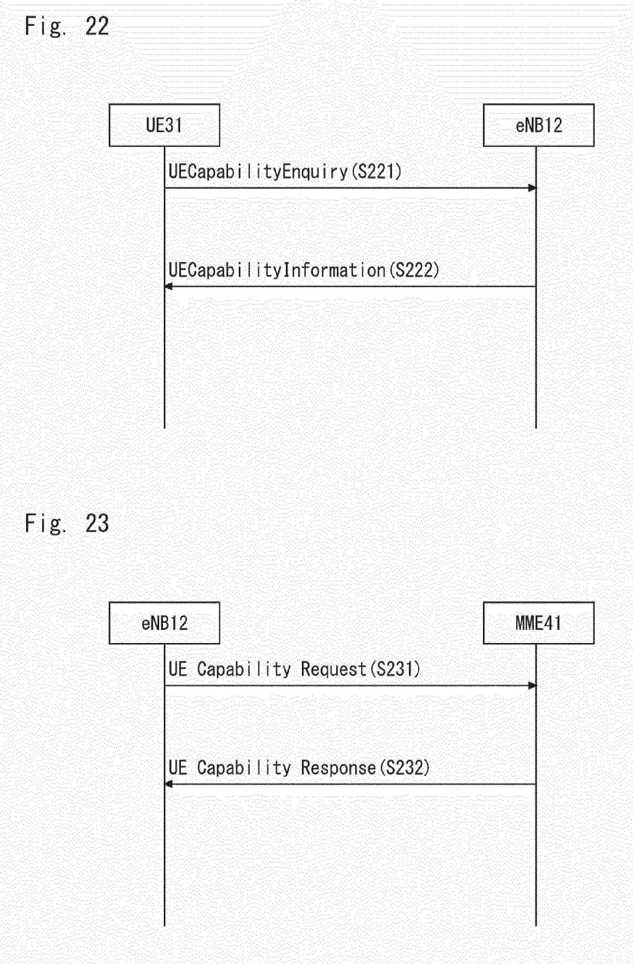

Method 1 in Step S202 of Fig. 21 is described hereinafter with reference to Fig. 22. The eNB 12 sends a UE Capability Enquiry message to the UE 31 in order to make a request for UE's capability (UE NR capability) to the UE 31 (S221). The UE 31 then sends an UE Capability Information message to the eNB 12 (S222). The UE Capability Enquiry message and the UE Capability Information message contain Security Algorithm Config IE. The UE 31 adds UE's capability, which is security algorithms, to the Security Algorithm Config IE.

Method 2 in Step S202 of Fig. 21 is described hereinafter with reference to Fig. 23. The eNB 12 sends a UE Capability Request message to the MME 41 in order to make a request for UE's capability (UE NR capability) to the MME 41 (S231). The MME 41 then sends an UE Capability Response message to the eNB 12 (S232). The eNB 12 adds, to the UE Capability Request message, IE related to information needed to be acquired among UE network capability, UE security capability, NR Subscription, UE NR Capability, Selected NR Security Algorithm, and UE NR Security Algorithm Preference. The MME 41 adds the information requested by the eNB 12 in the UE Capability Response message.

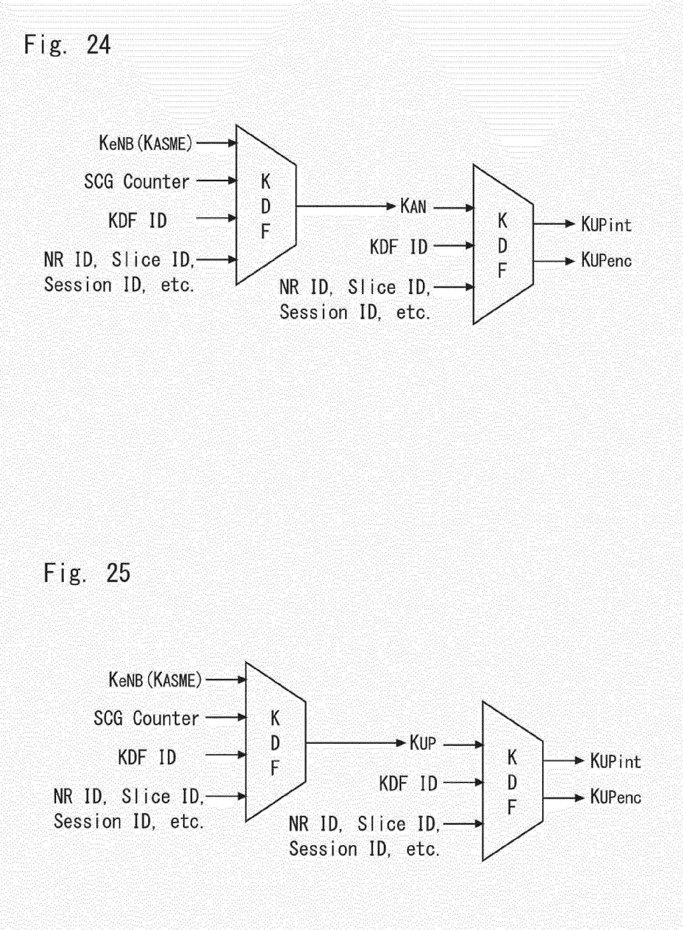

Derivation of security keys using KDF in the first to third embodiments is described hereinafter with reference to Figs. 24 and 25. A derivation function such as HMAC-SHA-256 is used as KDF, for example. Fig. 24 shows derivation of the security key K_{AN} using KDF. To be specific, the security key K_{eNB} (K_{ASME}), SCG Counter, KDF ID, NR ID, Slice ID, and Session ID are input as parameters to KDF to thereby obtain the security key K_{AN}. Further, the security key K_{AN}, KDF ID, NR ID, Slice ID, and Session ID are input as parameters to KDF to thereby obtain K_{UPint} and K_{UPenc}. The NR ID is identification information indicating a communication technology available in the UE 31. The NR ID is contained in the UE capability, for example. The Slice ID and Session ID may be also contained in the UE capability.

Fig. 25 shows derivation of the security key K_{UP} using KDF. To be specific, the security key K_{eNB} (K_{ASME}), SCG Counter, KDF ID, NR ID, Slice ID, and Session ID are input as parameters to KDF to thereby obtain the security key K_{UP}. Further, the security key K_{UP}., KDF ID, NR ID, Slice ID, and Session ID are input as parameters to KDF to thereby obtain K_{UPint} and K_{UPenc}.

Although the present disclosure is described as a hardware configuration in the above embodiments, it is not limited thereto. The present disclosure may be implemented by causing a CPU (Central Processing Unit) to execute a computer program to perform processing in the UE and each device.

In the above-described examples, the program can be stored and provided to the computer using any type of non-transitory computer readable medium. The non-transitory computer readable medium includes any type of tangible storage medium. Examples of the non-transitory computer readable medium include magnetic storage media (such as floppy disks, magnetic tapes, hard disk drives, etc.), optical magnetic storage media (e.g. magneto-optical disks), CD-ROM (Read Only Memory), CD-R , CD-R/W, DVD-ROM (Digital Versatile Disc Read Only Memory), DVD-R (DVD Recordable)), DVD-R DL (DVD-R Dual Layer)), DVD-RW (DVD Rewritable)), DVD-RAM), DVD+R), DVR+R DL), DVD+RW), BD-R (Blu-ray (registered trademark) Disc Recordable)), BD-RE (Blu-ray (registered trademark) Disc Rewritable)), BD-ROM), and semiconductor memories (such as mask ROM, PROM (Programmable ROM), EPROM (Erasable PROM), flash ROM, RAM (Random Access Memory), etc.). The program may be provided to a computer using any type of transitory computer readable medium. Examples of the transitory computer readable medium include electric signals, optical signals, and electromagnetic waves. The transitory computer readable medium can provide the program to a computer via a wired communication line such as an electric wire or optical fiber or a wireless communication line.

It should be noted that the present invention is not limited to the above-described embodiments and may be varied in many ways within the scope of the present invention. Further, in this disclosure, embodiments can be combined as appropriate.

### Reference Signs List

- 10: BASE STATION
- 12: eNB
- 20: BASE STATION
- 21: NR
- 22: gNB
- 30: COMMUNICATION TERMINAL
- 31: UE
- 40: EPC
- 41: MME
- 42: S-GW

## Claims

1. A system comprising:
an eNB (12);
a gNB (22); and
a Mobility Management Entity, MME (41), wherein
the MME (41) is configured to send, to the eNB (12), an NR subscription as a part of a Handover Restriction List and a UE NR capability; and
the eNB (12) is configured to determine whether to establish Dual Connectivity with the gNB (22) for the terminal (31) by checking whether the terminal (31) has capability for the gNB (22) and is authorized to access the gNB (22) based on the NR subscription and the UE NR capability after the terminal (31) and the eNB (12) establish a Radio Resource Control, RRC, connection.

2. An eNB (12) comprising a processor configured to:
receive, from a Mobility Management Entity, MME (41), an NR subscription as a part of a Handover Restriction List and a UE NR capability; and
determine whether to establish Dual Connectivity with the gNB (22) for the terminal (31) by checking whether the terminal (31) has capability for the gNB (22) and is authorized to access the gNB (22) based on the NR subscription and the UE NR capability after the terminal (31) and the eNB (12) establish a Radio Resource Control, RRC, connection.

3. A method performed by an eNB (12), the method comprising:
receiving (S202, S232), from a Mobility Management Entity, MME (41), an NR subscription as a part of a Handover Restriction List and a UE NR capability; and
determining (S203) whether to establish Dual Connectivity with the gNB (22) for the terminal (31) by checking whether the terminal (31) has capability for the gNB (22) and is authorized to access the gNB (22) based on the NR subscription and the UE NR capability after the terminal (31) and the eNB (12) establish (S201) a Radio Resource Control, RRC, connection.

## Patentansprüche

1. System, mit:
einem eNB (12);
einem gNB (22); und
einer Mobility Management Entity, MME (41), wobei
die MME (41) dafür konfiguriert ist, an den eNB (12) NR-Teilnahmeinformation als Teil einer Handover Restriction List und eine UE-NR-Fähigkeit zu übertragen, und
wobei der eNB (12) dafür konfiguriert ist, zu bestimmen, ob Dual-Konnektivität mit dem gNB (22) für das Endgerät (31) eingerichtet werden soll, indem basierend auf der NR-Teilnahmeinformation und der UE-NR-Fähigkeit geprüft wird, ob das Endgerät (31) die Fähigkeit für den gNB (22) besitzt und autorisiert ist, auf den gNB (22) zuzugreifen, nachdem das Endgerät (31) und der eNB (12) eine RRC-, Funkressourcensteuerung, Verbindung eingerichtet haben.

2. eNB (12), mit einem Prozessor, der dafür konfiguriert ist:
von einer Mobility Management Entity, MME (41), NR-Teilnahmeinformation als Teil einer Handover Restriction List und eine UE-NR-Fähigkeit zu empfangen; und
zu bestimmen, ob Dual-Konnektivität mit dem gNB (22) für das Endgerät (31) eingerichtet werden soll, indem basierend auf der NR-Teilnahmeinformation und der UE-NR-Fähigkeit geprüft wird, ob das Endgerät (31) die Fähigkeit für den gNB (22) besitzt und autorisiert ist, auf den gNB (22) zuzugreifen, nachdem das Endgerät (31) und der eNB (12) eine RRC-, Funkressourcensteuerung, Verbindung eingerichtet haben.

3. Verfahren, das durch einen eNB (12) ausgeführt wird, wobei das Verfahren die Schritte aufweist:
Empfangen (S202, S232) von NR-Teilnahmeinformation als Teil einer Handover Restriction List und einer UE-NR-Fähigkeit von einer Mobility Management Entity, MME (41); und
Bestimmen (S203), ob Dual-Konnektivität mit dem gNB (22) für das Endgerät (31) eingerichtet werden soll, indem basierend auf der NR-Teilnahmeinformation und der UE-NR-Fähigkeit geprüft wird, ob das Endgerät (31) die Fähigkeit für den gNB (22) besitzt und autorisiert ist, auf den gNB (22) zuzugreifen, nachdem das Endgerät (31) und der eNB (12) eine RRC-, Funkressourcensteuerung, Verbindung eingerichtet haben (5201).

## Revendications

1. Système comprenant :
un eNB (12) ;
un gNB (22) ; et
une entité de gestion de mobilité, MME (41), dans lequel
la MME (41) est configurée pourenvoyer, à l'eNB (12), un abonnement NR dans le cadre d'une liste de restrictions de transfert intercellulaire et d'une capacité NR d'UE; et
l'eNB (12) est configuré pour déterminer s'il faut établir une double connectivité avec le gNB (22) pour le terminal (31) en vérifiant si le terminal (31) a une capacité pour le gNB (22) et est autorisé à accéder au gNB (22) sur la base de l'abonnement NR et de la capacité NR d'UE après que le terminal (31) et l'eNB(12) aient établi une connexion de commande de ressources radio, RRC.

2. Noeud eNB (12) comprenant un processeur configuré pour :
recevoir, à partir d'une entité de gestion de mobilité, MME (41), un abonnement NRdans le cadre d'une liste de restrictions de transfert intercellulaire et d'une capacité NR d'UE ; et
déterminer s'il faut établir une double connectivité avec le gNB (22) pour le terminal (31) en vérifiant si le terminal (31) a une capacité pour le gNB (22) et est autorisé à accéder au gNB (22) sur la base de l'abonnement NR et de la capacité NR d'UE après que le terminal (31) et l'eNB (12) aient établi une connexion de commande de ressources radio, RRC.

3. Procédé réalisé par un eNB (12), le procédé comprenant :
la réception (S202, S232), à partir d'une entité de gestion de mobilité, MME (41), d'un abonnement NR dans le cadre d'une liste de restrictions de transfert intercellulaire et d'une capacité NR d'UE ; et
la détermination (S203) s'il faut établir une double connectivité avec le gNB (22) pour le terminal (31) en vérifiant si le terminal (31) a une capacité pour le gNB (22) et est autorisé à accéder au gNB (22) sur la base de l'abonnement NR et la capacité NR d'UE après que le terminal (31) et l'eNB (12) aient établi (S201) une connexion de commande de ressources radio, RRC.
